(19) Europäisches Patentamt
European Patent Office
Office européen des brevets

(11) Veröffentlichungsnummer: **0 025 136**
**B1**

# (12) EUROPÄISCHE PATENTSCHRIFT

(45) Veröffentlichungstag der Patentschrift: **06.07.83**

(51) Int. Cl.³: **C 09 K 11/06,** H 01 L 31/04, C 07 D 405/04, C 07 D 407/04, C 09 B 57/02

(21) Anmeldenummer: **80104817.4**

(22) Anmeldetag: **14.08.80**

## (54) Lichtsammelsystem und Verwendung von Cumarinderivaten als Energiewandler in solchen Systemen.

(30) Priorität: **27.08.79 DE 2934541**
**22.12.79 DE 2952228**

(43) Veröffentlichungstag der Anmeldung: **18.03.81 Patentblatt 81/11**

(45) Bekanntmachung des Hinweises auf die Patenterteilung: **06.07.83 Patentblatt 83/27**

(84) Benannte Vertragsstaaten: **CH DE FR GB IT LI NL**

(56) Entgegenhaltungen:
**CH-A-428 953**
**DE-A-2 837 257**
**FR-A-1 338 020**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Claussen, Uwe, Dr., Karl-Krekeler-Strasse 5, D-5090 Leverkusen 1 (DE)**
Erfinder: **Harnisch, Horst, Dr., Heinenbusch 4, D-5203 Much (DE)**

**EP 0 025 136 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Lichtsammelsysteme und Verwendung von Cumarinderivaten als Energiewandler in solchen Systemen

Vorrichtungen zum Sammeln diffuser elektromagnetischer Strahlung durch Ausnützen der Fluoreszenz sind bekannt. Kernstück der Sammler ist ein gegenüber der Umgebung optisch dichteres Medium, das fluoreszenzfähige Zentren enthält (DE-A-2 620 115).

Die ökonomische Verwendbarkeit eines Lichtsammelsystems wird in hohem Maße von der Brauchbarkeit des in ihm als Lichtwandler eingesetzten Farbstoffs bestimmt. An die optische Qualität dieses Farbstoffs werden extreme Anforderungen gestellt [Appl. Phys. 14, 123—139 (1977)].

Die Erfindung betrifft neue Lichtsammelsysteme, die dadurch gekennzeichnet sind, daß sie als Energiewandler ein Cumarinderivat der Formel

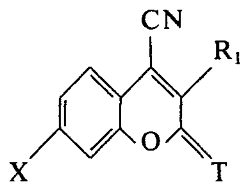

(I)

enthalten.

In Formel (I) bedeutet:

T O oder $NR_4$,
wobei
$R_4$ für Wasserstoff, gegebenenfalls substituiertes Alkyl, gegebenenfalls substituiertes Aryl, gegebenenfalls substituiertes Cycloalkyl, gegebenenfalls substituiertes Aralkyl steht;

$R_1$ ein über ein C-Atom gebundener carbo- oder heterocyclischer 5- oder 6gliedriger Ring oder ein über ein N-Atom gebundener 5- oder 6gliedriger heterocyclischer Ring, der zu einer durch die Cumarin-N-Heterocyclus-Bindung gelegten Achse rotationsunsymmetrisch ist, wobei die genannten 5- oder 6gliedrigen Ringe nicht-ionogene Substituenten tragen können und an sie ein gegebenenfalls substituierter Benzol- oder ein gegebenenfalls substituierter Naphthalinring ankondensiert sein kann;

X 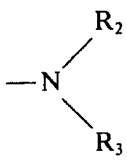 oder $—OR_2'$

bezeichnet, wobei
$R_2$ für Wasserstoff, Alkyl, Cycloalkyl, Aralkyl, Aryl, wobei die genannten Kohlenwasserstoffreste substituiert sein können, steht;
$R_3$ zusätzlich zu den genannten Definitionen für $R_2$ noch einen Rest der Formeln

$R_6—(Z)_n—CO—$ oder $R_7—(Z)_n—SO_2—$

bezeichnet, in denen
$R_6$, $R_7$ für Alkyl, Cycloalkyl, Aryl oder Aralkyl stehen, wobei die genannten Kohlenwasserstoffreste substituiert sein können,
Z für NH oder O und
n für 0 oder 1 stehen, oder

$R_2$, $R_3$ zusammen mit dem N-Atom und gegebenenfalls unter Einschluß weiterer Heteroatome einen 5- oder 6gliedrigen Ring bilden, wobei dieser Ring nicht-ionogene Substituenten tragen kann und an ihn ein gegebenenfalls substituierter Benzol- oder ein gegebenenfalls substituierter Naphthalinring ankondensiert sein kann, oder

$R_2$, $R_3$ zusammen einen zweifach ungesättigten Rest der Formel

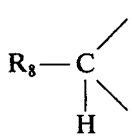

bilden, in dem
$R_8$ für gegebenenfalls substituiertes Alkyl, gegebenenfalls substituiertes Aryl, gegebenenfalls substituiertes Cycloalkyl und/oder gegebenenfalls substituiertes Aralkyl steht und

$R_2'$ gegebenenfalls durch Acetoxy, $C_1-C_4$-Alkoxy, Phenoxy, Cyclohexyloxy, Phenyl-$C_1-C_2$-alkoxy, Brom oder Chlor substituiertes $C_1-C_5$-Alkyl, Allyl, Cyclohexyl oder Phenyl-$C_1-C_2$-alkyl bezeichnet.

$R_1$ steht bevorzugt für einen 5- oder 6gliedrigen heterocyclischen Ring, der 1, 2 oder 3 Heteroatome aus der Reihe N, O, S enthält und an den ein Benzolring ankondensiert sein kann, wobei sowohl der heterocyclische Ring wie auch der ankondensierte Benzolring durch beispielsweise Alkyl, Aryl, Aralkyl, Cycloalkyl, Halogen, Alkoxy, Cyan und Acyl substituiert sein können.

Als Beispiele für $R_1$ in der Bedeutung eines 5- oder 6gliedrigen heterocyclischen Ringes an den ein Benzolring ankondensiert sein kann, seien genannt: Pyrazol, Imidazol, Thiazol, Oxazol, 1.2.4-Triazol, 1.3.4-Oxdiazol, 1.3.4-Thiadiazol, Benzimidazol, Benzthiazol, Benzoxazol, Pyridin.

Besonders bevorzugt steht $R_1$ für einen heterocyclischen Rest der Formel

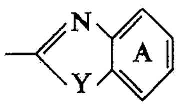

in der

Y O, $NR_5$ oder S bezeichnet, wobei $R_5$ für Wasserstoff, Alkyl, Aryl, Cycloalkyl oder Aralkyl steht, wobei die genannten Kohlenwasserstoffreste substituiert sein können und der Ring A durch Alkyl, Sulfoalkyl, Aryl, Aralkyl, Cycloalkyl, Alkoxy, Acyl, Halogen, Sulfamoyl und Cyan substituiert sein kann.

In einer Ausgestaltung der Erfindung ist der Ring A durch vorzugsweise 1 bis 2 Substituenten aus der Reihe $C_1-C_4$-Alkyl, $C_1-C_4$-Alkoxy, Brom, Chlor, Phenyl, Cyclohexyl, $C_1-C_4$-Alkylsulfonyl, Sulfamoyl oder $C_1-C_4$-Alkoxycarbonyl substituiert.

$R_2$, $R_3$ zusammen mit dem N-Atom und gegebenenfalls unter Einschluß weiterer Heteroatome bilden bevorzugt einen solchen 5- oder 6gliedrigen Ring, der 1 oder 2 weitere Heteroatome aus der Reihe N, O, S enthalten kann und an den ein Benzolring ankondensiert sein kann, wobei der Heterocyclus sowohl im heterocyclischen Teil wie auch der ankondensierte Benzolring durch beispielsweise Alkyl, Aryl, Aralkyl, Cycloalkyl, Halogen, Alkoxy, Cyan und Acyl substituiert sein können.

Alkyl ($R_2$, $R_3$, $R_4$, $R_5$, $R_6$, $R_7$, $R_8$, als Substituent des Rings A sowie als nicht-ionogener Substituent der 5- oder 6gliedrigen Ringe $R_1$ oder der durch $R_2$, $R_3$ zusammen mit dem N-Atom gebildeten 5- oder 6gliedrigen Ringe bzw. der ankondensierten Ringe) steht bevorzugt für $C_1-C_6$-Alkyl.

Aryl ($R_2$, $R_3$, $R_4$, $R_5$, $R_6$, $R_7$, $R_8$, als Substituent des Rings A sowie als nicht-ionogener Substituent der 5- oder 6gliedrigen Ringe $R_1$ oder der durch $R_2$, $R_3$ zusammen mit dem N-Atom gebildeten 5- oder 6gliedrigen Ringe bzw. der ankondensierten Ringe) steht bevorzugt für Phenyl.

Aralkyl ($R_2$, $R_3$, $R_4$, $R_5$, $R_6$, $R_7$, $R_8$ als Substituent des Rings A sowie als nicht-ionogener Substituent der 5- oder 6gliedrigen Ringe $R_1$ oder der durch $R_2$, $R_3$ zusammen mit dem N-Atom gebildeten 5- oder 6gliedrigen Ringe bzw. der ankondensierten Ringe) steht bevorzugt für Benzyl und Phenethyl.

Cycloalkyl ($R_2$, $R_3$, $R_4$, $R_5$, $R_6$, $R_7$, $R_8$ als Substituent des Rings A sowie als nicht-ionogener Substituent der 5- oder 6gliedrigen Ringe $R_1$ oder der durch $R_2$, $R_3$ zusammen mit dem N-Atom gebildeten 5- oder 6gliedrigen Ringe bzw. der ankondensierten Ringe) steht bevorzugt für Cyclohexyl.

Acyl (als Substituent des Rings A sowie als nicht-ionogener Substituent der 5- oder 6gliedrigen Ringe $R_1$ oder der durch $R_2$, $R_3$ zusammen mit dem N-Atom gebildeten 5- oder 6gliedrigen Ringe bzw. der ankondensierten Ringe) steht bevorzugt für ($C_1-C_6$-Alkyl)-carbonyl, Benzoyl, $C_1-C_6$-Alkylsulfonyl und Phenylsulfonyl.

Halogen (als Substituent des Rings A sowie als nicht-ionogener Substituent der 5- oder 6gliedrigen Ringe $R_1$ oder der durch $R_2$, $R_3$ zusammen mit dem N-Atom gebildeten 5- oder 6gliedrigen Ringe bzw. der ankondensierten Ringe) steht bevorzugt für Chlor, Brom und Fluor.

Alkoxy (als Substituent des Rings A sowie als nicht-ionogener Substituent der 5- oder 6gliedrigen Ringe $R_1$ oder der durch $R_2$, $R_3$ zusammen mit dem N-Atom gebildeten 5- oder 6gliedrigen Ringe bzw. der ankondensierten Ringe) steht bevorzugt für $C_1-C_6$-Alkoxy.

Substituiertes Alkyl ($R_2$, $R_3$, $R_4$, $R_5$, $R_6$, $R_7$, $R_8$) steht für Alkyl, das beispielsweise durch Halogen wie Chlor und Brom, Hydroxyl, Cyan, Trifluormethyl, $C_1-C_6$-Alkoxy, $C_1-C_6$-Alkylsulfonyl, Phenylsulfonyl, durch $C_1-C_6$-Alkyl und Phenyl mono- und disubstituiertes Carbamoyl, Carbamoyl, Sulfamoyl, durch $C_1-C_6$-Alkyl und Phenyl mono- und disubstituiertes Sulfamoyl und durch $C_1-C_6$-Alkyl und Phenyl mono- oder disubstituiertes Amino, substituiert sein kann.

Substituiertes Aryl ($R_2$, $R_3$, $R_4$, $R_5$, $R_6$, $R_7$, $R_8$), substituiertes Cycloalkyl ($R_2$, $R_3$, $R_4$, $R_5$, $R_6$, $R_7$, $R_8$) und substituiertes Aralkyl ($R_2$, $R_3$, $R_4$, $R_5$, $R_6$, $R_7$, $R_8$) stehen für Aryl, Cycloalkyl oder Aralkyl, die neben den vorstehend für Alkyl genannten Substituenten beispielsweise noch durch $C_1-C_6$-Alkyl substituiert sein können.

Weitere bevorzugt als Lichtwandler verwendbare Farbstoffe sind:

a) Cumarinderivate der Formel (I), bei denen $R_2$, $R_3$ zusammen mit dem N-Atom und gegebenenfalls unter Einschluß weiterer Heteroatome einen 5- oder 6gliedrigen Ring bilden, wobei dieser Ring nicht-ionogene Substituenten tragen kann und an ihn ein gegebenenfalls substituierter Benzol- oder ein gegebenenfalls substituierter Naphthalinring ankondensiert sein kann.

b) Farbstoffe der Formel

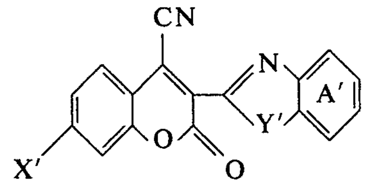

(III)

in der

X' 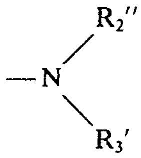 oder $-O-R_2'''$

bezeichnet, wobei

$R_2''$ für Wasserstoff, $C_1-C_4$-Alkyl, insbesondere Methyl und Ethyl,
$R_3'$ für $C_1-C_4$-Alkyl, insbesondere Methyl und Ethyl, $C_1-C_4$-Alkylsulfonyl, Phenylsulfonyl, und
$R_2'''$ für $C_1-C_4$-Alkyl, insbesondere Methyl und Ethyl, stehen;

Y' O, $NR_5'$ oder S bezeichnen, wobei
$R_5'$ $C_1-C_4$-Alkyl, insbesondere Methyl, oder Phenyl bezeichnet und wobei der Ring

A' durch $C_1-C_4$-Alkyl, insbesondere Methyl, $C_1-C_4$-Alkoxy, insbesondere Methoxy, Halogen, insbesondere Chlor, $C_1-C_4$-Alkylsulfonyl, insbesondere Methylsulfonyl, und Sulfamoyl substituiert sein kann.

Die erfindungsgemäß als Energiewandler in Lichtsammelsystemen verwendbaren Verbindungen der Formel (I) sind bekannt (siehe z. B. die deutsche Offenlegungsschrift 2 844 299) oder können in Analogie zu literaturbekannten Verfahren hergestellt werden.

Ein neues Verfahren zur Herstellung von Farbstoffen der Formel (I), bei denen X für $-OR_2'$ steht, ist dadurch gekennzeichnet, daß man Verbindungen der Formel

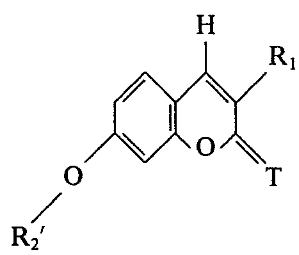

(IV)

worin

$R_1$, $R_2'$ und T die oben angegebene Bedeutung besitzen,

in einem polaren organischen Lösungsmittel in an sich bekannter Weise (vgl. DE-OS 2 844 299) mit Cyanidsalzen umsetzt und gleichzeitig oder nachträglich mit Oxidationsmitteln behandelt.

Geeignete polare organische Lösungsmittel sind Alkohole, wie Methanol, Ethanol, Isopropanol, 2-Methoxy-ethanol, 2-Ethoxy-ethanol, Ethylenglykol, 2-Cyan-ethanol, insbesondere aber dipolar aprotische organische Lösungsmittel wie Dimethylformamid, sowie Pyridin und Picoline.

Eine Zwischenisolierung des Cyanid-Anlagerungsproduktes ist nicht erforderlich.

Geeignete Oxidationsmittel sind beispielsweise Luftsauerstoff, Wasserstoffperoxid, Persulfate, Perborate, Salpetersäure, Brom, Sulfurylchlorid, Bleitetraacetat und Chloranil.

Als Cyanidsalze verwendet man vorteilhaft wasserlösliche Cyanide, insbesondere Alkalicyanide.

Die Umsetzung von Cyanidsalzen wird im Temperaturbereich von 0 bis 120° C, vorzugsweise bei 10 bis 60° C, und die Oxidation im Bereich von −5 bis 30° C, vorzugsweise bei 0 bis 15° C, durchgeführt.

Die Ausgangsfarbstoffe der Formel (IV) sind bekannt oder nach bekannten Verfahren herzustellen.

Einschlägige Patentpublikationen sind beispielsweise US 3 014 041, 3 288 801, 3 496 188, 3 816 413,

3 839 333, 3 669 621, 3 704 302, 3 839 351, 3 776 905, 3 968 119, 4 055 568 sowie GB 1 269 004, 1 313 253 und 1 318 975.

Die neuen Lichtsammelsysteme, bei denen es sich um Formkörper geeigneter Geometrie, d. h. optische Systeme handelt, bei denen das Verhältnis von Emissions- zu Absorptionsfläche 1 : 50 bis 1 : 2000 betragen kann, sind geeignet, einfallende diffuse elektromagnetische Strahlung zu absorbieren und sie in einem gegenüber der Umgebung optisch dichteren Medium nahezu verlustlos zu emittieren, wodurch der Hauptteil des Emissionslichtes total reflektiert im Medium verbleibt.

Nur der Anteil des emittierten Lichts, dessen Emissionsbande weitgehend frei von Absorption ist, ist für den erfindungsgemäßen Zweck nutzbar.

Daher ist es zweckmäßig, die Farbstoffe der Formel (I) vor Einsatz in die Lichtsammelsysteme besonders zu reinigen. Insbesondere müssen sie weitgehend frei sein von langwellig absorbierenden Verunreinigungen.

Die Erfindung betrifft demnach bevorzugt Lichtsammelsysteme, die dadurch gekennzeichnet sind, daß sie einen Farbstoff der Formel (I) enthalten, der in einer 0,05%igen Lösung, beispielsweise in Chloroform, gemessen in einer Schichtdicke von 10 cm, einen Anstieg der Transmission von 0% auf >90% bei einer Änderung der Wellenlänge von 25—100 nm, vorzugsweise 25—45 nm aufweist.

Die Reinigung der Farbstoffe kann in günstigen Fällen durch mehrfache sorgfältige Kristallisation erfolgen.

Zumeist ist eine säulenchromatographische Trennung an festen Trägern wie $Al_2O_3$ oder $SiO_2$ erforderlich. Besonders schonend erhält man hohe Reinheitsgrade verteilungschromatographisch, z. B. durch Steady-State-(O'Keefe)- oder Gegenstromverteilung nach Craig.

Die neuen Lichtsammelsysteme können z. B. in Verbindung mit Solarzellen zur Nutzbarmachung der Sonnenenergie und in Szintillatoren bekannter Art [siehe z. B. J. B. Birks: The Theory and Practice of Scintillation Counting (Pergamon Press, London 1964); J. Opt. Am. 39, 912 (1949); J. Appl. Phys. 40, 3544 (1969); Nuclear Instruments a. Methods 87, 111—123 (1970) Research Disclosure, S. 43 (1977); DE-OS 2 629 641)] Verwendung finden. Darüber hinaus eignen sie sich in Verbindung mit elektronischen Steuerungen als Anzeigevorrichtungen mit sehr geringem Energieverbrauch und weiterhin eignen sie sich ohne elektronische Bauteile für vielerlei Anzeige-, Hinweis- und Markierungszwecke, z. B. in passiven Anzeigeelementen, Hinweis- und Verkehrszeichen wie Ampeln.

Die erfindungsgemäßen Lichtsammelsysteme enthalten den Farbstoff in einer Flüssigkeit oder einem Festkörper gelöst, wobei je nach Einsatzgebiet des Lichtsammelsystems verschiedenste geometrische Formen in Frage kommen. Geeignete feste Medien wie sie z. B. zum Sammeln von Licht in Verbindung mit Solarzellen und in passiven Anzeigeelementen eingesetzt werden, sind z. B. lichtdurchlässige, optisch verwendbare Kunststoffe wie Homo- und Copolymerisate der Acrylsäure(derivate) oder Polycarbonate. Des weiteren können die Lichtsammelsysteme den Farbstoff auch in einer Flüssigkeit — z. B. Alkohol, Keton, Halogenkohlenwasserstoff, Ether — gelöst enthalten. Gut geeignete Lösungsmittel sind z. B. Ethanol, Propanol, Methyl-ethyl-keton, Aceton, Cyclohexanon, Chloroform, Perchlorethylen, Glykolmonomethylether.

Die Verwendung der Farbstoffe der Formel (I) in Feststoffen ist bevorzugt.

Die erfindungsgemäße Verwendung der Farbstoffe der Formel (I) ist in hohem Maße vorteilhaft, da sie neben einer guten Quantenausbeute und einem hohen Verstärkungsfaktor ausgezeichnete Lichtechtheit aufweisen und damit eine ökonomische Verwendbarkeit der neuen Lichtsammelsysteme gewährleisten.

Ein besonderes Kennzeichen ist der auch bei langwelliger Absorption sehr große Stokes-Shift bei gleichzeitig sehr guter Lichtechtheit.

Es muß als überraschend bezeichnet werden, daß die Farbstoffe der Formel (I) sich zur vorteilhaften Verwendung in Lichtsammelsystemen eignen, da zahlreiche stark fluoreszierende Farbstoffe wie z. B. Rhodamin G nicht brauchbar sind. Ebenso sind die schon sehr weitgehenden Forderungen, die an die optische Qualität von Laserfarbstoffen gestellt werden, in vielen Fällen nicht ausreichend, um die Verwendung dieser Farbstoffe in Lichtsammelsystemen zu empfehlen.

## Beispiel 1

4 g 3-(6-Methyl-benzoxazolyl)-4-cyan-7-diethyl-amino-cumarin werden in 60 ml Chloroform gelöst und an 800 g Kieselgel (Merck) chromatographiert. Elutionsmittel ist Essigester/Methanol 3 : 1. Man erhält 3,2 g Produkt, das aus n-Butanol umkristallisiert wird.

Fp.: 213°C.

500 g der Verbindung werden in 1 l Chloroform gelöst und in einer Schichtdicke von 10 cm die Transmission T gemessen. Die Durchlässigkeit beträgt 0% bei 595 nm und bei 625 nm 94%. Die Fluoreszenzquantenausbeute $\Phi$ beträgt 0,70, der Stokes-Shift $\triangle$69 nm und der Anteil der nutzbaren Fluoreszenz 65%. Unter dem »Anteil der nutzbaren Fluoreszenz« versteht man den Prozentanteil des ursprünglich emittierten Fluoreszenzlichtes, der nicht durch Reabsorption verlorengeht.

Analog zu Beispiel 1 erhält man für die in der folgenden Tabelle aufgeführten Verbindungen die angegebenen Werte.

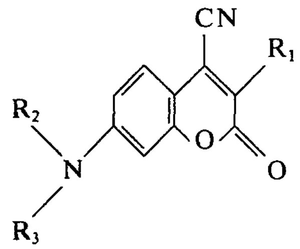

| Beispiel Nr. | $R_2$ | $R_3$ | $R_1$ | $\Phi$ Fl | $\Delta$ [nm] | T [%] | Anteil der nutzbaren Fluoreszenz [%] | Fp. |
|---|---|---|---|---|---|---|---|---|
| 2 | $C_2H_5$ | $C_2H_5$ | 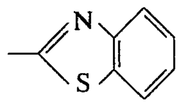 | 0,81 | 52 | 92 | 57 | 254° |
| 3 | $C_2H_5$ | $C_2H_5$ | 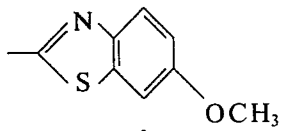 | 0,51 | 79 | 85 | 72 | 279° |
| 4 | $C_2H_5$ | $C_2H_5$ | 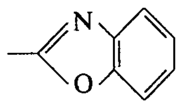 | 0,61 | 51 | 92 | 64 | 292° |
| 5 | $C_2H_5$ | $C_2H_5$ | 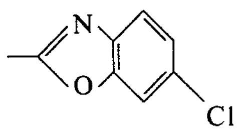 | | | | | |
| 6 | | | 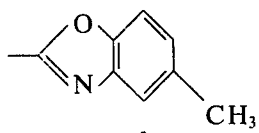 | 0,95 | 100 | 82 | 80 | 265° |
| 7 | 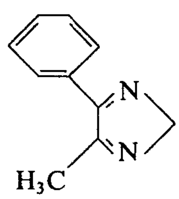 | | 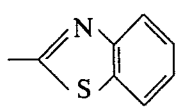 | 0,52 | 88 | 94 | 69 | 258° |
| 8 | | | 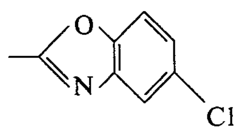 | 0,97 | 102 | 94 | 79 | 233° |
| | Rhodamin B | | | 0,61 | 20 | 98 | 24 | |

Analog zu Beispiel 1 lassen sich auch die folgenden Verbindungen gut in Lichtsammelsystemen verwenden:

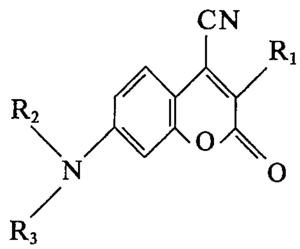

| $R_3$ | $R_2$ | $R_1$ |
|---|---|---|
| n-$C_4H_9$ | —n-$C_4H_9$ | 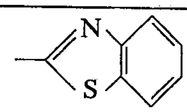 |
| 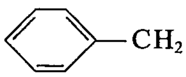 | 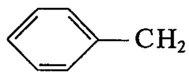 | 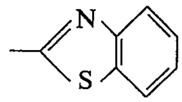 |
| $C_2H_5$— | $C_2H_5$— | 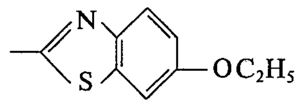 |
| 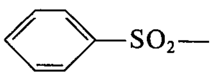 | H | 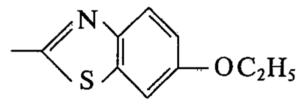 |
| 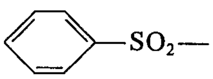 | H | 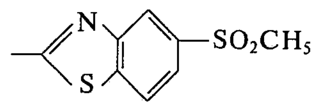 |
| 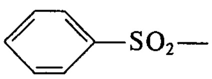 | H | 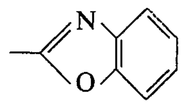 |
| 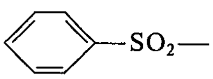 | H | 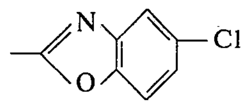 |
| 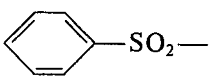 | H | 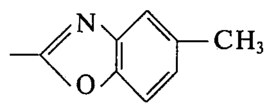 |
| 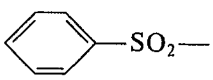 | H | 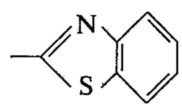 |
| 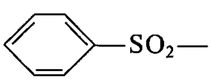 | H | 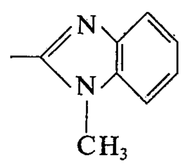 |
| 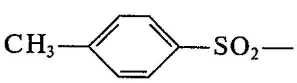 | H | 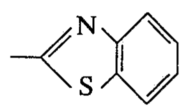 |
| 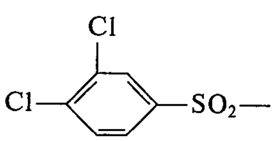 | H | 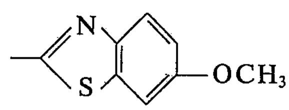 |

Fortsetzung

| $R_3$ | $R_2$ | $R_1$ |
| --- | --- | --- |
| $NC-CH_2-CH_2-$ | $NC-CH_2-CH_2-$ | 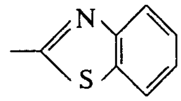 |
| 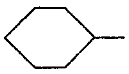$-OCH_2-CH_2-$ | H | 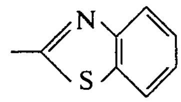 |
| $C_2H_5$ | $C_2H_5$ | 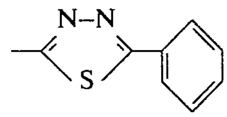 |
| $C_4H_9$ | $C_4H_9$ | 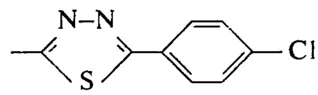 |

Beispiel 9

19,2 g 6-Methoxy-3-(benzthiazolyl-2-)4-cyano-7-ethoxy-cumarin werden in 1200 ml Dichlorbenzol gelöst und mit 0,5 g Tonsil versetzt. Es wird heiß filtriert und nach Abkühlen erhält man 15,1 g Kristalle. Diese Kristallisation wird zweimal wiederholt, wobei bei der letzten das Tonsil fortgelassen wird. Die gelben Kristalle haben den Fp.: 302° C.

488 mg der so erhaltenen Verbindung werden in 1 l Chloroform gelöst und es wird in einer Schichtdicke von 10 cm die Transmission T gemessen. Die Durchlässigkeit beträgt 0% bei 550 nm und bei 580 nm 92%. Die Fluoreszenzquantenausbeute $\Phi$ beträgt 1,00, der Stokes-Shift $\triangle$135 nm und der Anteil der nutzbaren Fluoreszenz 88%. Unter dem »Anteil der nutzbaren Fluoreszenz« versteht man den Prozentanteil des ursprünglich emittierten Fluoreszenzlichtes, der nicht durch Reabsorption verlorengeht.

Analog zu Beispiel 9 erhält man für die in der folgenden Tabelle aufgeführten Verbindungen die angegebenen Werte.

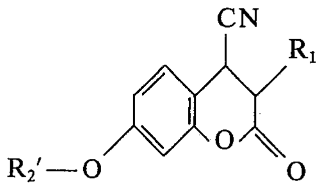

| $R_2'$ | $R_1$ | Φ [%] | Stokes [nm] | T % | Nutzb. Fluoresz. % | Fp. °C | Beispiel Nr. |
|---|---|---|---|---|---|---|---|
| $CH_3$— | 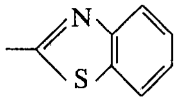 | 0,63 | 92 | 96 | 76 | 276 | 10 |
| $C_2H_5$— | 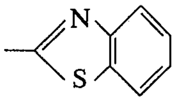 | 0,48 | 93 | 95 | 67 | 215 | 11 |
| $CH_3$— | 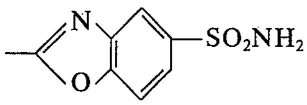 | 0,75 | 119 | 90 | 82 | 287 | 12 |
| $CH_3$— | 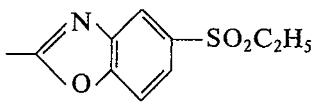 | 0,87 | 100 | 90 | 65 | 212 | 13 |
| $CH_3$— | 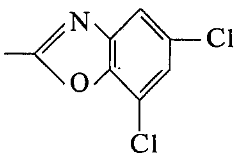 | 0,86 | 99 | 92 | 73 | 254 | 14 |
| $CH_3$— | 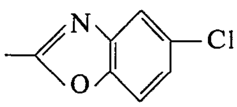 | 1,0 | 100 | 95 | 84 | 252 | 15 |
| $CH_3$— | 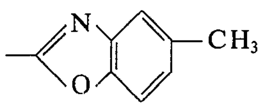 | 0,71 | 114 | 94 | 87 | 230 | 16 |
| $CH_3$— | 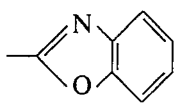 | 0,75 | 119 | 95 | 85 | 244 | 17 |
| $C_2$–$H_5$– | 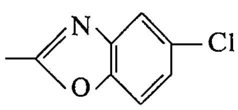 | 0,79 | 100 | 97 | 72 | 217 | 18 |
| $C_2$–$H_5$– | 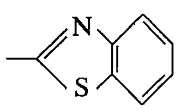 | 0,89 | 100 | 95 | 83 | 211 | 19 |
| $CH_3$— | 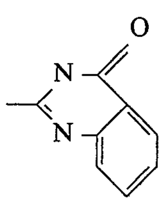 | 0,88 | 84 | 93 | 77 | 309 | 20 |

Analog zu Beispiel 9 lassen sich auch die folgenden Verbindungen gut in Lichtsammelsystemen verwenden:

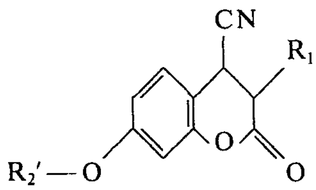

| $R_2'$ | $R_1$ |
|---|---|
| n-$C_4H_9$ | 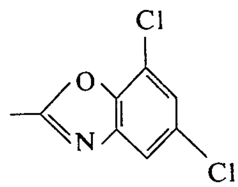 |
| 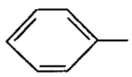$-CH_2OCH_2CH_2-$ | 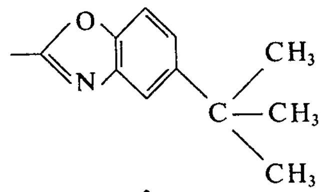 |
| 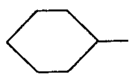$-O-CH_2-CH_2-$ | 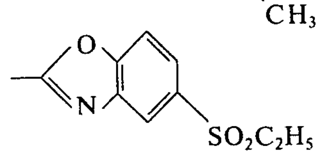 |
| $C_2H_5$ | 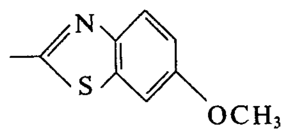 |
| 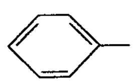$-CH_2-$ | 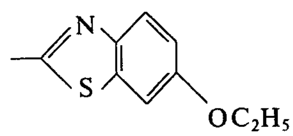 |
| $CH_3OCH_2CH_2-$ | 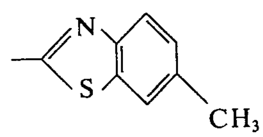 |
| n-$C_4H_9$ | 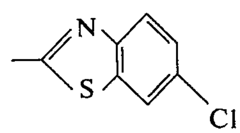 |
| $CH_2{=}CH-CH_2$ | 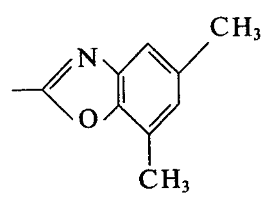 |

Fortsetzung

| $R_2'$ | $R_1$ |
|---|---|
| $Cl-CH_2-CH_2-$ | 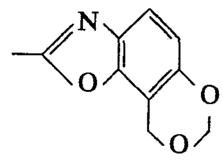 |
| $CH_2{=}CH-CH_2-$ | 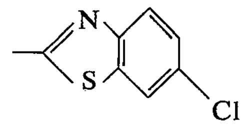 |
| $CH_3$ | 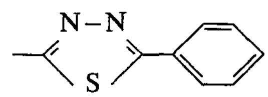 |
| $C_2H_5$ | 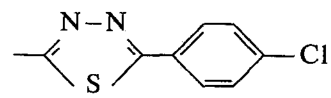 |
| $C_2H_5$ | 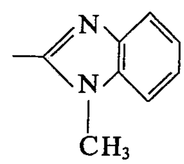 |

**Patentansprüche**

1. Lichtsammelsystem enthaltend ein Cumarinderivat, dadurch gekennzeichnet, daß es ein Cumarinderivat der Formel

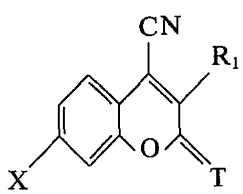

(I)

enthält, in der

T O oder $NR_4$,
wobei
$R_4$ für Wasserstoff, gegebenenfalls substituiertes Aryl, gegebenenfalls substituiertes Cycloalkyl oder gegebenenfalls substituiertes Aralkyl steht,

$R_1$ ein über ein C-Atom gebundener carbo- oder heterocyclischer 5- oder 6gliedriger Ring oder ein über ein N-Atom gebundener 5- oder 6gliedriger heterocyclischer Ring, der zu einer durch die Cumarin-N-Heterocyclus-Bindung gelegten Achse rotationsunsymmetrisch ist, wobei die genannten 5- oder 6gliedrigen Ringe nicht-ionogene Substituenten tragen können und an sie ein gegebenenfalls substituierter Benzol- oder ein gegebenenfalls substituierter Naphthalinring ankondensiert sein kann, bedeutet;

X 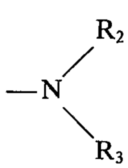 oder $-OR_2'$

bezeichnet, wobei

$R_2$ für Wasserstoff, Alkyl, Cycloalkyl, Aralkyl, Aryl, wobei die genannten Kohlenwasserstoffreste substituiert sein können, steht;

$R_3$ zusätzlich zu den genannten Definitionen für $R_2$ noch einen Rest der Formeln

$R_6-(Z)_n-CO-$ oder $R_7-(Z)_n-SO_2-$

bezeichnet, in denen

$R_6$, $R_7$ für Alkyl, Cycloalkyl, Aryl oder Aralkyl stehen, wobei die genannten Kohlenwasserstoffreste substituiert sein können,

Z für NH oder O und

n für 0 oder 1 stehen, oder

$R_2$, $R_3$ zusammen mit dem N-Atom und gegebenenfalls unter Einschluß weiterer Heteroatome einen 5- oder 6gliedrigen Ring bilden, wobei dieser Ring nicht-ionogene Substituenten tragen kann und an ihn ein gegebenenfalls substituierter Benzol- oder ein gegebenenfalls substituierter Naphthalinring ankondensiert sein kann, oder

$R_2$, $R_3$ zusammen einen zweifach ungesättigten Rest der Formel

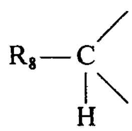

bilden, in dem

$R_8$ für gegebenenfalls substituiertes Alkyl, gegebenenfalls substituiertes Aryl, gegebenenfalls substituiertes Cycloalkyl oder gegebenenfalls substituiertes Aralkyl steht und

$R_2'$ gegebenenfalls durch Acetoxy, $C_1-C_4$-Alkoxy, Phenoxy, Cyclohexyloxy, Phenyl-$C_1-C_2$-alkoxy, Brom oder Chlor substituiertes $C_1-C_5$-Alkyl, Allyl, Cyclohexyl oder Phenyl-$C_1-C_2$-alkyl bezeichnet.

2. Lichtsammelsystem gemäß Anspruch 1, dadurch gekennzeichnet, daß es ein Cumarinderivat der Formel (I) enthält, bei dem $R_1$ für einen Pyrazolyl, Imidazolyl, Thiazolyl, Oxazolyl, 1.2.4-Triazolyl, 1.3.4-Oxadiazolyl, 1.3.4-Thiadiazolyl, Benzimidazolyl, Benzthiazolyl, Benzoxazolyl oder Pyridinyl-Rest stehen, wobei die genannten heterocyclischen Reste substituiert sein können.

3. Lichtsammelsystem gemäß Anspruch 1, dadurch gekennzeichnet, daß es ein Cumarinderivat der Formel (I) enthält, bei dem

$R_2$ für Wasserstoff und

$R_3$ für einen Rest der Formeln

$R_6-(Z)_n-CO-$ oder $R_7-(Z)_n-SO_2-$

stehen, wobei

$R_6$, $R_7$ Alkyl, Cycloalkyl, Aryl oder Aralkyl bezeichnen und die genannten Kohlenwasserstoffreste substituiert sein können,

Z für NH oder O und

n für 0 oder 1 stehen.

4. Lichtsammelsystem gemäß Anspruch 1, dadurch gekennzeichnet, daß es ein Cumarinderivat der Formel (I) enthält, bei dem

$R_2$, $R_3$ zusammen mit dem N-Atom und gegebenenfalls unter Einschluß weiterer Heteroatome einen 5- oder 6gliedrigen Ring bilden, wobei dieser Ring nicht-ionogene Substituenten tragen kann und an ihn ein gegebenenfalls substituierter Benzol- oder ein gegebenenfalls substituierter Naphthalinring ankondensiert sein kann.

5. Lichtsammelsystem, dadurch gekennzeichnet, daß es ein Cumarinderivat der Formel

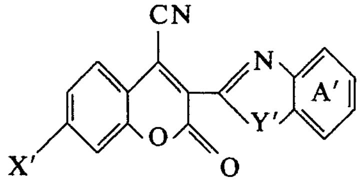

(III)

enthält, in der

X' 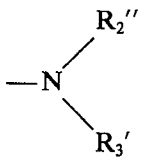 oder $-O-R_2'''$

bezeichnet, wobei

$R_2''$ für Wasserstoff, $C_1-C_4$-Alkyl, insbesondere Methyl und Ethyl,

$R_3'$ für $C_1-C_4$-Alkyl, insbesondere Methyl und Ethyl, $C_1-C_4$-Alkylsulfonyl, Phenylsulfonyl, und

$R_2'''$ für $C_1-C_4$-Alkyl, insbesondere Methyl und Ethyl, stehen;

Y' O, $NR_5'$ oder S bezeichnet, wobei

$R_5'$ $C_1-C_4$-Alkyl, insbesondere Methyl oder Phenyl bezeichnet und wobei der Ring

A' durch $C_1-C_4$-Alkyl, insbesondere Methyl, $C_1-C_4$-Alkoxy, insbesondere Methoxy, Halogen, insbesondere Chlor, $C_1-C_4$-Alkylsulfonyl, insbesondere Methylsulfonyl und Sulfamoyl substituiert sein kann.

6. Lichtsammelsystem, dadurch gekennzeichnet, daß es ein Cumarinderivat gemäß den Ansprüchen 1 bis 5 enthält, das in einer 0,05%igen Lösung, gemessen in einer Schichtdicke von 10 cm einen Anstieg der Transmission von 0% auf >90% bei einer Änderung der Wellenlänge von 25—100 nm, vorzugsweise 25—45 nm, aufweist.

7. Verwendung von Cumarinderivaten gemäß den Ansprüchen 1 bis 6 als Energiewandler in Lichtsammelsystemen.

**Claims**

1. Light-collecting system containing a coumarin derivative, characterised in that it contains a coumarin derivative of the formula

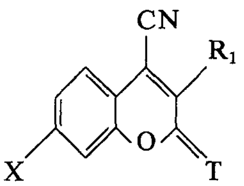

(I)

in which

T denotes O or $NR_4$,

in which

$R_4$ represents hydrogen, optionally substituted aryl, optionally substituted cycloalkyl or optionally substituted aralkyl,

$R_1$ denotes a carbocyclic or heterocyclic 5-membered or 6-membered ring bonded via a C atom, or a 5-membered or 6-membered heterocyclic ring which is bonded via a N atom and is rotationally asymmetrical to an axis placed through the coumarin/N-heterocyclic bond, it being possible for the said 5-membered or 6-membered rings to carry non-ionic substituents and für an optionally substituted benzene ring or an optionally substituted naphthalene ring to be fused to the said rings;

X signifies 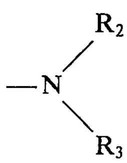 or $-OR_2'$

in which

$R_2$ represents hydrogen, alkyl, cycloalkyl, aralkyl or aryl, it being possible for the said hydrocarbon radicals to be substituted, and

$R_3$, in addition to having the definitions given für $R_2$, also signifies a radical of the formulae

$$R_6-(Z)_n-CO- \text{ or } R_7-(Z)_n-SO_2-$$

in which

$R_6$ and $R_7$ represent alkyl, cycloalkyl, aryl or aralkyl, it being possible for the said hydrocarbon radicals to be substituted,

Z represents NH or O and

n represents 0 or 1, or

$R_2$ and $R_3$ together with the N atom and optionally with the inclusion of further hetero-atoms form a 5-membered or 6-membered ring, it being possible for this ring to carry non-ionic substituents and for an optionally substituted benzene ring or an optionally substituted naphthalene ring to be fused thereto, or

$R_2$ and $R_3$ together form a di-unsaturated radical of the formula

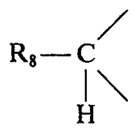

in which

$R_8$ represents optionally substituted alkyl, optionally substituted aryl, optionally substituted cycloalkyl or optionally substituted aralkyl, and

$R_2'$ signifies $C_1-C_5$-alkyl, which is optionally substituted by acetoxy, $C_1-C_4$-alkoxy, phenoxy, cyclohexyloxy, phenyl-$C_1-C_2$-alkoxy, bromine or chlorine, or allyl, cyclohexyl or phenyl-$C_1-C_2$-alkyl.

2. Light-collecting system according to Claim 1, characterised in that it contains a coumarin derivative of the formula (I) in which $R_1$ represents a pyrazolyl, imidazolyl, thiazolyl, oxazolyl, 1,2,4-triazolyl, 1,3,4-oxadiazolyl, 1,3,4-thiadiazolyl, benzimidazolyl, benzthiazolyl, benzoxazolyl or pyridinyl radical and the said heterocyclic radicals can be substituted.

3. Light-collecting system according to Claim 1, characterised in that it contains a coumarin derivative of the formula (I) in which

$R_2$ represents hydrogen and

$R_3$ represents a radical of the formulae

$R_6-(Z)_n-CO-$ or $R_7-(Z)_n-SO_2-$

in which

$R_6$ and $R_7$ signify alkyl, cycloalkyl, aryl or aralkyl and the said hydrocarbon radicals can be substituted,

Z represents NH or O and

n represents 0 or 1.

4. Light-collecting system according to Claim 1, characterised in that it countains a coumarin derivative of the formula (I), in which

$R_2$ and $R_3$ together with the N atom and optionally with the inclusion of further hetero-atoms form a 5-membered or 6-membered ring, it being possible for this ring to carry non-ionic substituents and for an optionally substituted benzene ring or an optionally substituted naphthalene ring to be fused thereto.

5. Light-collecting system, characterised in that it contains a coumarin derivative of the formula

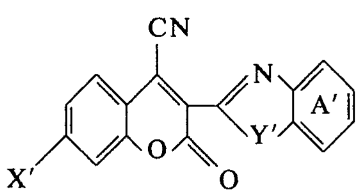

in which

X' signifies 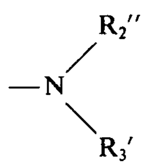 or $-O-R_2'''$

in which

$R_2''$ represents hydrogen or $C_1-C_4$-alkyl, especially methyl and ethyl,

$R_3'$ represents $C_1-C_4$-alkyl, especially methyl and ethyl, $C_1-C_4$-alkylsulphonyl or phenylsulphonyl and

$R_2'''$ represents $C_1-C_4$-alkyl, especially methyl and ethyl;
Y' signifies O, $NR_5'$ or S and
$R_5'$ signifies $C_1-C_4$-alkyl, especially methyl, or phenyl
and in which
the ring A' can be substituted by $C_1-C_4$-alkyl, especially methyl, $C_1-C_4$-alkoxy, especially methoxy, halogen, especially chlorine, $C_1-C_4$-alkylsulphonyl, especially methylsulphonyl, or sulphamoyl.

6. Light-collecting system, characterised in that it contains a coumarin derivative according to claims 1 to 5, which, in a 0.05% strength solution, measured in a layer thickness of 10 cm, displays an increase in the transmission from 0% to >90% for a change in the wavelength of 25—100 nm and preferably of 25—45 nm.

7. Use of coumarin derivatives according to Claims 1 to 6 as energie converters in light-collecting systems.

**Revendications**

1. Système collecteur de lumière contenant un dérivé de la coumarine, caractérisé en ce qu'il contient un dérivé de la coumarine de formule

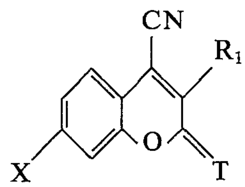

(I)

dans laquelle
T représente O ou $NR_4$,
$R_4$ représentant l'hydrogène, un groupe aryle éventuellement substitué, cycloalkyle éventuellement substitué ou aralkyle éventuellement substitué;
$R_1$ représente un noyau carbocyclique ou hétérocyclique à 5 ou 6 chaînons relié par l'intermédiaire d'un atome de carbone ou un noyau hétérocyclique à 5 ou 6 chaînons relié par l'intermédiaire d'un atome d'azote, asymétrique en rotation par rapport à un axe défini par la liaison coumarine-hétérocycle azoté, les noyaux à 5 ou 6 chaînons en question pouvant porter des substituants non ioniques, et un noyau benzénique éventuellement substitué ou naphthalénique éventuellement substitué pouvant être condensé sur ces noyaux;

X représente 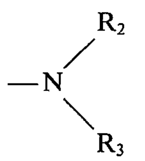 ou $-OR_2'$

$R_2$ représente l'hydrogène, un groupe alkyle, cycloalkyle, aralkyle, aryle, les restes hydrocarbonés mentionnés pouvant être substitués;
$R_3$, outre les définitions mentionnées pour $R_2$, représentant encore un reste de formules

$R_6-(Z)_n-CO-$ ou $R_7-(Z)_n-SO_2-$

dans lesquelles
$R_6$, $R_7$ représentent des groupes alkyle, cycloalkyle, aryle ou aralkyle, les restes hydrocarbonés mentionnés pouvant être substitués,
Z représente NH ou O et
n est égal à 0 ou 1, ou bien
$R_2$, $R_3$ forment ensemble et avec l'atome d'azote et le cas échéant inclusion d'autres hétéroatomes un noyau à 5 ou 6 chaînons qui peut porter des substituants non ioniques, un noyau benzénique éventuellement substitué ou naphthalénique éventuellement substitué pouvant être condensé sur ce noyau, ou bien
$R_2$, $R_3$ forment ensemble un reste di-insaturé de formule

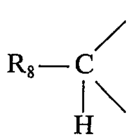

dans laquelle

$R_8$ représente un groupe alkyle éventuellement substitué, aryle éventuellement substitué, cycloalkyle éventuellement substitué ou aralkyle éventuellement substitué et

$R_2'$ représente un groupe alkyle en $C_1-C_5$ éventuellement substitué par des groupes acétoxy, alcoxy en $C_1-C_4$, phénoxy, cyclohexyloxy, phényl-(alcoxy en $C_1-C_2$), le brome ou le chlore, un groupe allyle, cyclohexyle ou phényl-(alkyle en $C_1-C_2$).

2. Système collecteur de lumière selon la revendication 1, caractérisé en ce qu'il contient un dérivé de la coumarine de la formule (I), dans laquelle $R_1$ représente un reste pyrazolyle, imidazolyle, thiazolyle, oxazolyle, 1,2,4-triazolyle, 1,3,4-oxadiazolyle, 1,3,4-thiadiazolyle, benzimidazolyle, benzothiazolyle, benzoxazolyle ou pyridinyle, les restes hétérocycliques mentionnés pouvant être substitués.

3. Système collecteur de lumière selon la revendication 1, caractérisé en ce qu'il contient un dérivé de la coumarine de formule (I) dans laquelle

$R_2$ représente l'hydrogène et

$R_3$ représente un reste de formule

$$R_6-(Z)_n-CO \text{ ou } R_7-(Z)_n-SO_2-$$

$R_6$, $R_7$ représentant des groupes alkyle, cycloalkyle, aryle ou aralkyle, les restes hydrocarbonés mentionnés pouvant être substitués,

Z représente NH ou O et

n est égal à 0 ou 1.

4. Système collecteur de lumière selon la revendication 1, caractérisé en ce qu'il contient un dérivé de la coumarine de formule (I) dans laquelle

$R_2$, $R_3$ forment ensemble et avec l'atome d'azote et, le cas échéant, inclusion d'autres hétéroatomes un noyau à 5 ou 6 chaînons qui peut porter des substituants non ioniques, un noyau benzénique éventuellement substitué ou naphthalénique éventuellement substitué pouvant être condensé sur ce noyau.

5. Système collecteur de lumière, caractérisé en ce qu'il contient un dérivé de la coumarine de formule

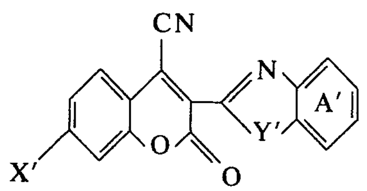

dans laquelle

X' représente 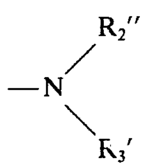 ou $—O—R_2'''$

$R_2''$ représentant l'hydrogène, un groupe alkyle en $C_1-C_4$, plus spécialement méthyle ou éthyle,

$R_3'$ représentant un groupe alkyle en $C_1-C_4$, plus particulièrement méthyle ou éthyle, alkylsulfonyle en $C_1-C_4$, phénylsulfonyle, et

$R_2'''$ représentant un groupe alkyle en $C_1-C_4$, plus particulièrement méthyle ou éthyle;

Y' représente O, $NR_5'$ ou S,

$R_5'$ représentant un groupe alkyle en $C_1-C_4$, plus particulièrement méthyle, ou phényle, le noyau

A' pouvant être substitué par des groupes alkyle en $C_1-C_4$, plus particulièrement méthyle, des groupes alcoxy en $C_1-C_4$, plus spécialement méthoxy, des halogènes, en particulier le chlore, des groupes alkylsulfonyle en $C_1-C_4$, en particulier méthylsulfonyle, et des groupes sulfamoyle.

6. Système collecteur de lumière, caractérisé en ce qu'il contient un dérivé de la coumarine selon l'une des revendications 1 à 5, qui, en solution à 0,5%, la mesure étant faite à une épaisseur de couche de 10 cm, provoque une augmentation de la transmission de 0% à plus de 90% pour une modification de la longueur d'onde de 25 à 100 nm, de préférence de 25 à 45 nm.

7. Utilisation des dérivés de la coumarine selon les revendications 1 à 6 en tant que convertisseurs d'énergie dans les systèmes collecteurs de lumière.